# EUROPÄISCHE PATENTSCHRIFT

(11) **EP 3 245 426 B1**
(45) Veröffentlichungstag und Bekanntmachung des Hinweises auf die Patenterteilung: **19.05.2021**
(21) Anmeldenummer: 16721628.2
(22) Anmeldetag: 13.01.2016
(51) Int. Cl.: F16H 57/02, F16H 57/04, F16H 61/00

(54) **ÖLPUMPENANORDNUNG FÜR EIN KRAFTFAHRZEUG**
OIL PUMP ARRANGEMENT FOR A MOTOR VEHICLE
SYSTÈME DE POMPE À HUILE POUR VÉHICULE AUTOMOBILE

(30) Priorität: 13.01.2015 DE 102015200317
(43) Veröffentlichungstag der Anmeldung: 22.11.2017
(73) Patentinhaber: Volkswagen Aktiengesellschaft, 38440 Wolfsburg (DE)
(72) Erfinder: WARNECKE, Raimar, 38179 Schwülper (DE); KNOLL, Waldemar, 31311 Dollbergen (DE); SPRENGER, Ralf, 38518 Gifhorn (DE); TAGGE, Holger, 38108 Braunschweig (DE); CORNELSEN, Karsten, 38110 Braunschweig (DE); BIRNBAUM, Thomas, 38106 Braunschweig (DE); MÜLLER, Frank, 38165 Essenrode (DE); MORTHORST, Bernd, 38124 Braunschweig (DE); WÖHL-BRUHN, Henning, 38162 Cremlingen (DE)
(86) Internationale Anmeldenummer: PCT/EP2016/000047
(87) Internationale Veröffentlichungsnummer: WO 2016/113133

(56) Entgegenhaltungen:
- EP-A1- 1 992 846
- EP-A2- 2 497 665
- DE-A1-102007 041 584
- DE-T5-112010 005 177
- JP-A- 2014 009 676
- US-A1- 2010 320 849
- US-A1- 2012 128 513

## Beschreibung

Die Erfindung betrifft eine Ölpumpenanordnung eines Kraftfahrzeuggetriebes, mit den Merkmalen des Patentanspruches 1.

Aus der DE 10 2007 018 504 A1 ist eine Ölpumpenanordnung für ein Getriebe eines Kraftfahrzeugs bekannt. Ein hydrodynamisches Pumpenteil und ein elektrischer Pumpenmotor bilden eine Ölpumpe in Form einer Motor-Pumpen-Einheit. Diese Motor-Pumpen-Einheit ist in einem Getriebegehäuse in einem Ölbad unterhalb des Ölspiegels angeordnet. Mittels des Pumpenteils wird das Getriebeöl an einem Pumpeneintritt angesaugt und aus einem Pumpenaustritt in eine Schmierleitung und parallel in einen Kühlzweig gefördert. Über die Schmierleitung werden Schmierstellen des Getriebes mit dem Getriebeöl versorgt. Durch die Kühlleitung gelangt das Betriebsmedium zu einer oder zu mehreren Spritzdüsen, durch welche das Getriebeöl auf die zu kühlenden Getriebeteile gelangt. Anschließend sammelt sich das Getriebeöl wieder im Getriebegehäuse. Um die Versorgung der Schmierstellen mit dem Getriebeöl bei niedrigen Temperaturen sicherzustellen, wird unterhalb einer kritischen Temperaturgrenze die Kühlleitung über eine Absperreinrichtung verschlossen, so dass die gesamte, bei niedrigen Temperaturen stark reduzierte, Fördermenge der Motor-Pumpen-Einheit zu den Schmierstellen gelangt. Beim Ausfall des Elektromotors ist eine Getriebezerlegung notwendig.

Aus der DE 43 42 233 A1 ist eine Ölpumpenanordnung für ein Getriebe bekannt. Die Ölpumpenanordnung weist eine Ölpumpe mit einem Pumpenteil auf. Das Pumpenteil ist zum einen über eine Ausgangswelle mit einem Verbrennungsmotor koppelbar und zum anderen mit einem Pumpenmotor in Form eines Elektromotors koppelbar. Das Getriebe weist ein erstes Gehäuse und ein zweites Gehäuse auf, die miteinander verbunden sind und einen Ölraum bilden, der einen Getriebemechanismus, einen Differentialmechanismus und ein Pumpenteil in Form einer Zahnradölpumpe umfasst. Die Zahnradölpumpe weist ein Pumpengehäuse auf, wobei das Pumpengehäuse innen an dem ersten Gehäuse befestigt ist. Außerhalb des zweiten Gehäuses ist ein Elektromotor angeordnet, der über eine Einwegkupplung mit der Zahnradölpumpe verbunden ist. Der Elektromotor ist außerhalb des Ölraums angeordnet. Der Elektromotor ist außen an dem zweiten Gehäuse angeordnet. Das zweite Gehäuse weist eine entsprechende Öffnung auf, wobei eine Ausgangswelle des Elektromotors die Öffnung durchgreift und mit einer Antriebswelle des Pumpenteils über die Einwegkupplung verbunden ist. Der Außenrotor und der Innenrotor der Einwegkupplung werden über Schmieröllöcher zum Einführen von Schmieröl geschmiert. Eine Motorsteuereinrichtung ist an den Elektromotor durch einen Stecker angeschlossen. Die Motorsteuereinrichtung steuert die Zufuhr elektrischer Energie zur Steuerung der Drehung des Elektromotors. Die Zahnradölpumpe ist daher entweder mit dem Elektromotor oder mit dem Fahrzeugmotor antreibbar. Ein Antriebswählmittel wählt den ersten Kraftübertragungsweg zum Antrieb der Ölpumpe mit dem Elektromotor, wenn die Drehzahl der Ausgangswelle des Fahrzeugmotors unter einer vorbestimmten Drehzahl liegt, und wählt den zweiten Kraftübertragungsweg zum Antrieb der Ölpumpe mit dem Fahrzeugmotor, wenn die Drehzahl der Ausgangswelle des Fahrzeugmotors die vorbestimmte Drehzahl überschreitet.

Aus der EP 2 302 264 B1 ist eine Ölpumpenanordnung für ein Getriebe eines Kraftfahrzeugs bekannt. Es ist eine Hauptölpumpe vorgesehen, wobei die Hauptölpumpe von einem Verbrennungsmotor des Kraftfahrzeugs antreibbar ist. Ferner weist die Ölpumpenanordnung eine Zusatzölpumpe mit einem Pumpenteil und mit einem Pumpenmotor in Form eines Elektromotors auf. Das Pumpenteil und der Pumpenmotor bilden eine Einheit. Die Zusatzölpumpe ist außen an einem Getriebe angebracht. Das Kraftfahrzeug ist mit einem Start-Stopp-System ausgestattet. Wenn der Verbrennungsmotor abgeschaltet wird, fördert die Hauptölpumpe nicht mehr. Die Zusatzölpumpe dient nun dazu, während des Stopps des Verbrennungsmotors Kupplungen und/oder Aktuatoren mit einem entsprechenden Öldruck zu versorgen. Die Hauptölpumpe und die Zusatzölpumpe saugen das Öl aus einer Ölwanne mittels eines Ölsiebs an. Innerhalb der Ölwanne ist ein Öldrucksteuergerät angeordnet, das von den beiden Ölpumpen, nämlich der Zusatzölpumpe und der Hauptölpumpe gespeist wird. Mittels des Öldrucksteuergerätes wird die entsprechende Kupplung mit Drucköl versorgt. Der Motor, ein Drehmomentwandler und das Getriebe sind quer in einem Frontbereich des Kraftfahrzeugs angeordnet. Die Zusatzölpumpe ist außen an einer seitlichen, stirnseitigen Gehäusewand des Getriebes angeordnet. Diese Gehäusewand weist in Richtung eines der angetriebenen Vorderräder. Diese Gehäusewand ist dem Drehmomentwandler und dem Motor abgewandt, wobei die Zusatzölpumpe außerhalb des Bereichs des gelenkten Vorderrads angeordnet ist. Hinter dem Getreibe ist ein Achsdifferential angeordnet. Die Zusatzölpumpe weist ein Pumpenteil, einen Pumpenmotor und ein Steuergerät auf, wobei diese drei Teile im Wesentlichen vertikal aufragend übereinander angeordnet sind, wobei oben das Pumpenteil und unten das Steuergerät und dazwischen der Pumpenmotor angeordnet ist. Das Pumpenteil ist hierbei als Kolbenpumpe ausgebildet.

Diese Ölpumpenanordnung ist noch nicht optimal ausgebildet. Eine außen am Getriebegehäuse montierte Zusatzölpumpe erfordert zusätzliche Anschlüsse, die Dichtheitsprobleme aufweisen könnten. Ferner erfordert diese Anordnung zusätzlichen Bauraum außerhalb des Getriebegehäuses.

Aus der EP 2 497 665 A1 ist ein Hybrid-Antriebsstrang mit zwei Ölpumpen bekannt, wobei eine Pumpenwelle mit einer Kurbelwelle verbunden ist. Die Pumpenwelle ist ferner von einem elektrischen Pumpenmotor antreibbar. Der elektrische Pumpenmotor ist koaxial zur Pumpenwelle angeordnet. Die Pumpenwelle ist über ein Zwanglaufgetriebe mit der Kurbelwelle verbunden. Der elektrische Pumpenmotor ist zwischen dem Zwanglaufgetriebe und einer der Ölpumpen angeordnet. Die Pumpenwelle ist in eine erste Teilwelle und eine zweite Teilwelle unterteilt, die über eine Steckverbindung drehfest miteinander verbunden sind. Eine erste Pumpe zur Versorgung eines ersten Hydrauliksystems ist an der ersten Teilwelle angeordnet bzw. wird von dieser angetrieben. Die erste Pumpe ist konzentrisch zu der ersten Teilwelle angeordnet. Ferner ist an der zweiten Teilwelle eine zweite Pumpe angeordnet bzw. wird von dieser angetrieben. Die zweite Pumpe ist ebenfalls konzentrisch zu der zweiten Teilwelle angeordnet und dient dazu, das zweite Hydrauliksystem mit Fluid zu versorgen. Im Bereich zwischen den zwei Pumpen ist konzentrisch zu der Pumpenwelle der elektrische Pumpenmotor angeordnet. Der Pumpenmotor weist einen Stator auf, der als Innenstator ausgebildet und mit einem Getriebegehäuse starr verbunden ist. Der Stator ist mit einem sich in radialer Richtung erstreckenden Statorträger verbunden, mittels dessen der Stator an dem Getriebegehäuse festgelegt ist.

Aus der US2010/320 849 A1 ist eine elektronische Antriebseinheit bekannt. Ein Mantelgehäuse definiert einen hohlen Innenraum, der sich entlang einer primären Achse erstreckt. Eine Hohlwelle ist im Innenraum des Mantelgehäuses angeordnet und erstreckt sich entlang der primären Achse. Ein Elektromotor ist in dem Innenraum des Mantelgehäuses angeordnet und umgibt radial einen Abschnitt der Hohlwelle, wobei der Elektromotor funktional mit der Hohlwelle derart verbunden ist, dass die Hohlwelle in Antwort auf einen Betrieb des Elektromotors um die primäre Achse rotiert. Zumindest ein Zahnradsatz ist in beabstandeter Beziehung zu dem Elektromotor entlang der primären Achse angeordnet, wobei der zumindest eine Zahnradsatz in funktionalem Eingriff mit der Hohlwelle steht und zur Rotation um die primäre Achse ausgestaltet ist. Der Elektromotor ragt dabei in einen Ölsumpf. Eine Pumpe ist auf der primären Achse angeordnet und zur Rotation um diese ausgestaltet, um Öl aus dem Sumpf zu fördern.

Aus der US 2012/128513 A1 ist eine Ölpumpenanordnung bekannt, wobei ein Getriebegehäuse eine zylindrische Aufnahme aufweist. In der zylindrischen Aufnahme ist eine Pumpeneinheit mit einem Pumpenteil und einem Pumpenmotor angeordnet. In einem unteren Wandbereich der Aufnahme ist ein Öleinlassloch vorhanden, das mit einer Ölwanne in Verbindung steht. Zumindest das Pumpenteil ragt in einen Ölsumpf innerhalb der Aufnahme. Die Aufnahme ist von einem Deckel abdichtend verschlossen.

Aus der EP 1 992 846 B1 ist eine Ölpumpenanordnung mit einem Pumpenteil und einem elektrischen Pumpenmotor bekannt. Das Pumpenteil ist als Innenzahnradpumpe ausgebildet und weist ein Pumpengehäuse mit einer Aufnahme auf, in der ein Innenzahnrad und ein Außenzahnrad angeordnet sind. Der Pumpenmotor weist ein Motorgehäuse auf, wobei innerhalb des Motorgehäuses ein Rotor und ein Stator angeordnet ist. Der Rotor durchgreift eine Öffnung im Pumpengehäuse und treibt das Innenzahnrad an. Das Pumpengehäuse und das Motorgehäuse sind direkt miteinander verbunden. Das Pumpengehäuse ist durch eine Pumpenplatte stirnseitig verschlossen.

Aus der JP 2014 009676 A ist eine elektrische Pumpenanordnung mit einer Ölpumpe und einem Motor für ein Kraftfahrzeuggetriebe bekannt. Die Pumpenanordnung ist an einem Motorgehäuse oder einem Getriebegehäuse angebracht oder befestigt. Die Pumpenanordnung weist eine Pumpenplatte mit mehreren, vorstehenden Flanschteilen auf, die mittels Bolzen an dem Motorgehäuse oder Getriebegehäuse befestigt werden. Die Pumpenplatte ist an einer Seite an einem Pumpenmotorgehäuse angeordnet, die beide zusammen eine Pumpenkammer der Ölpumpe begrenzen. Das Pumpenmotorgehäuse ist auf der anderen Seite an einer zylindrischen Stirnseite durch eine Abdeckung verschlossen. An dem Pumpenmotorgehäuse ist eine doppeltgestufte Montagewand ausgebildet, die einen inneren zylindrischen Bereich aufweist. Der zylindrische Bereich ist von einer Welle durchgriffen, wobei die Welle mittels zweier Lager am Innenumfang des zylindrischen Bereichs gelagert ist. Die Welle wird von einer Öldichtung umgriffen, die das Innere des Pumpenmotorgehäuses gegen das Eindringen von Öl abdichtet. Im Inneren des Pumpenmotorgehäuses ist ein Innenrotor des Motors drehfest mit dem Ende der Welle verbunden.

Aus der gattungsbildenden DE 11 2010 005 177 T5 ist ein Differentialgetriebe bekannt, wobei innerhalb eines Gehäuses zwei Kupplungen vorhanden sind. Das Differentialgetriebe weist zwei elektrisch betriebene Ölpumpen auf. Die beiden Ölpumpen sind jeweils durch eine Trochoidpumpe gebildet. Ein Pumpenteil weist fünf Pumpenteilgehäuse auf, die gestapelt, als eine integrierte Einheit innerhalb des Gehäuses an einer Montagewand befestigt sind. Zwischen dem Pumpenteil und dem Gehäuse mit der Montagewand ist ein Ölraum in Form einer ölgefüllten Pumpenkammer gebildet. Ein elektrischer Pumpenmotor ist von außen am Gehäuse montiert. Der Pumpenmotor ragt mit einer Welle in eine nach außen weisende Aufnahme des Gehäuses hinein. Diese Aufnahme bildet eine mit Luft gefüllte Rotorkammer. Der Pumpenmotor befindet sich außerhalb des Ölraumes. Die Montagewand weist einen Durchgriff auf. Eine Zwischenwelle verbindet das Pumpenteil und den Pumpenmotor, wobei die Zwischenwelle mittels einer Dichtung den Ölraum gegenüber der mit Luft gefüllten Rotorkammer abdichtet.

Aus der DE 10 2007 041 584 A1 ist eine Ölpumpenanordnung eines Automatikgetriebes mit einer elektrisch betriebenen Zusatzölpumpe bekannt. Diese elektrisch betriebene Zusatzölpumpe ist teilweise innerhalb eines Gehäuses, nämlich teilweise innerhalb einer Wandler- bzw. Kupplungsglocke angeordnet. Die Zusatzölpumpe durchdringt eine Wand der Wandler- bzw. Kupplungsglocke. Der elektrisch betriebene Pumpenteil ist außerhalb des Gehäuses bzw. der Wand angeordnet. Der hydraulische Pumpenteil ist im wesentlichen innerhalb des zum Antriebsmotor hin offenen Raumes des Gehäuses bzw. der Wandler- bzw. Kupplungsglocke angeordnet.

Der Erfindung liegt die Aufgabe zugrunde, die eingangs genannte Ölpumpenanordnung derart auszugestalten und weiterzubilden, so dass die Dichtheitsprobleme am Pumpenteil vermieden sind und der Bauraumbedarf verringert ist.

Diese der Erfindung zugrunde liegende Aufgabe wird durch eine Ölpumpenanordnung mit den Merkmalen des Patentanspruches 1 gelöst.

Das Pumpenteil ist innerhalb des Gehäuses montierbar und der Pumpenmotor ist von außen am Gehäuse montierbar. Da das Pumpenteil im Ölraum angeordnet ist, sind Dichtheitsprobleme vermieden und der Bauraumbedarf außerhalb des Gehäuses ist reduziert. Ferner hat diese Ausgestaltung den Vorteil, dass der elektrische Pumpenmotor von außen einfach austauschbar ist. Das Gehäuse ist als Kupplungsgehäuse ausgebildet und begrenzt insbesondere zusätzlich auch einen Getrieberaum. Das Getriebe muss daher nicht zerlegt werden, um den Pumpenmotor zu tauschen. Das Pumpenteil ist insbesondere im Inneren des Getriebes am Kupplungsgehäuse verschraubt.

Der Pumpenmotor und das Pumpenteil sind durch eine Zwischenwelle miteinander verbunden. Die Zwischenwelle ist insbesondere verliersicher in das Pumpenteil integriert. Vorzugsweise ist die Zwischenwelle nicht fest, sondern gelenkig gelagert, was den Vorteil hat, dass Winkelfehler zwischen dem Pumpenmotor und dem Pumpenteil ausgleichbar sind, ähnlich einer Gelenkwelle. Die Leistungsübertragung zwischen dem Pumpenmotor und dem Pumpenteil erfolgt vorzugsweise über eine formschlüssige Verbindung. Bspw. kann als formschlüssige Verbindung eine Steckverzahnung oder eine Verbindung mit einem Mehrkantprofil vorgesehen sein, wobei die Zwischenwelle und der Pumpenmotor über diese formschlüssige Verbindung miteinander verbunden sind. Ein Wirkungsgradvorteil ergibt sich dadurch, dass die gelenkig angeordnete Zwischenwelle keine Kräfte aufgrund eines Winkelversatzes in die Lagerstellen des Pumpenmotors und der Pumpenteils einleitet. Reibungsverluste der gelenkigen Lagerung der Zwischenwelle sind daher vernachlässigbar.

Bei der vorliegenden Erfindung weist das Gehäuse eine von außen zugängliche Aufnahme auf, wobei die Aufnahme in Einschiebrichtung durch eine Montagewand begrenzt ist. Der Pumpenmotor ist zumindest teilweise innerhalb der Aufnahme anordenbar. Der Pumpenmotor ist dabei an der Montagewand zentriert. Vorteilhaft verbleibt zwischen dem Außenumfang des Pumpenmotors und der Aufnahme ein Spalt, der ebenfalls ölbefüllt ist, so dass der Pumpenmotor umfänglich gekühlt wird. Die Montagewand weist insbesondere Verbindungsöffnungen auf, so dass die Aufnahme und der Spalt um den Pumpenmotor ebenfalls in Fluidverbindung mit dem Ölraum des Getriebes steht.

Das Pumpenteil ist von innen an der Montagewand montierbar. Das Pumpenteil ist am Gehäuse vorzugsweise verschraubt. Das hydraulische Pumpenteil ist fest und von außen unzugänglich im Getrieberaum integriert. Das Pumpenteil und der Pumpenmotor sind vorteilhafterweise über einen gemeinsamen Sitz an der Montagewand zentriert.

Die vorgeschlagene Ölpumpe hat auch den Vorteil, dass auf der Zwischenwelle keine Rotationsdichtung anliegt und so Reibungsverluste vermieden werden. Vorzugsweise ist ebenfalls keine berührende Dichtung bei den Lagerstellen des Pumpenmotors vorgesehen. Dadurch, dass die entsprechende Montagewand sich ebenfalls im Ölraum befindet, sind hier keine Dichtungen nötig.

Ein Steuergerät ist mit dem Kopf des Pumpenmotors, insbesondere durch eine Schraubverbindung, verbunden. Das Steuergerät liegt zumindest teilweise außerhalb der Aufnahme und damit auch außerhalb des Kupplungsgehäuses. Die Aufnahme ist mit dem Steuergerät abgeschlossen. Das Steuergerät dichtet gegen die Aufnahme ab. Das Gehäuse des Steuergerätes kann dabei in die Aufnahme des Kupplungsgehäuses eingreifen und mit diesem entsprechenden Gehäusebereich abdichtend verbunden sein.

Der Pumpenmotor und das Steuergerät sind durch mindestens eine elektrische Leitung, insbesondere durch mindestens eine Drei-Phasen-Leitung verbunden. Es ist ferner eine Ölabdichtung dieser stromführenden Leitungen an der Übergabestelle zwischen dem Steuergerätgehäuse und dem Pumpenmotorgehäuse z. B. durch einen Verguss realisiert.

Die Verbrennungskraftmaschine und das Getriebe sind im Frontbereich des Kraftfahrzeugs quer eingebaut. Das Getriebe ist vorzugsweise als Doppelkupplungsgetriebe ausgestaltet. Die Ölpumpe ist vorzugsweise in der Umgebung eines Differentials angeordnet. Die Ölpumpe ist insbesondere unterhalb des Differentials angeordnet. Die Ölpumpe kann so nahe an einem Saugfilter angeordnet sein. Die Rotorwelle des Pumpenmotors erstreckt sich insbesondere parallel zu den Achswellen des Differentials.

Nach der Montage des Steuergeräts ist das Steuergerät am Kupplungsgehäuse im Bereich eines Vorderachsantriebes bzw. einer Vorderachsquersperre bzw. eines Winkeltriebes bei Allradfahrzeugen angeordnet. Bei Allradfahrzeugen bzw. bei Quersperren-Fahrzeugen hat dies den Vorteil, dass kein Wärmetransport stattfindet. Sind weitere Zusatzaggregate nicht verbaut bspw. in Frontstandardbauweise, kann das Steuergerät der Wärme der Abgasanlage ausgesetzt sein. Die Entwärmung bzw. Kühlung des Steuergeräts kann über eine entsprechend massiv ausgestaltete Verschraubung des Steuergeräts mit dem Kupplungsgehäuse oder in alternativer Bauform über einen flächigen Kontakt des Steuergeräts mit dem Kupplungsgehäuse erfolgen.

Die Ölpumpe kann die einzige Druckversorgungsquelle des Getriebes sein, insbesondere bei Getrieben mit kleinerem Ölbedarf z. B. automatisierte Getriebe mit einer trockenen Kupplung/Doppelkupplung.

In einer anderen vorteilhaften Variante weist die Ölpumpenanordnung des Kraftfahrzeuggetriebes eine von einer Verbrennungskraftmaschine funktional wirksam angetriebene Hauptölpumpe auf, und die Ölpumpe wird als eine Zusatzölpumpe betrieben. Die Zusatzölpumpe ist vorzugsweise so in den Hydraulikkreislauf und den Schaltplan integriert, dass ein bestehendes Mechatronikkonzept nur wenig geändert werden muss. Der Hydraulikkreislauf ist vorzugsweise so ausgestaltet, dass die Zusatzölpumpe in einer Schaltstellung eines Umschaltventils die Mechatronik mit Drucköl versorgt und in einer anderen Schaltstellung des Umschaltventils auch vorteilhafterweise direkt einen Kühlölzweig insbesondere der Kupplung, vorzugsweise der Doppelkupplung, speisen kann. Die Kühlölversorgung benötigt nur einen geringeren Druck als der Systemhauptdruck. So ist es möglich, bei einem hohen Systemhauptdruck von beispielsweise 10 bar trotzdem große Kühlölmengen bei einem kleineren Druck von bspw. weniger als 3 bar bereitzustellen. Dies ist insbesondere in Fahrsituationen vorteilhaft, wie bspw. einem Kriechen am Berg oder einem Rangieren mit Anhänger. Außerdem ist es hierdurch möglich, ein Nachkühlen der Kupplung bei Fahrzeugstillstand oder im Leerlauf zu ermöglichen. Die Kühlung und die Aktuatorik können durch die Integration des Umschaltventils unabhängig voneinander mit Ölvolumen gespeist werden. Dadurch, dass das Umschaltventil vorgesehen ist, kann bei einer identischen Systemleistung eine geringere elektrische Antriebsleistung des Pumpenmotors bereitzustellen sein. Die kleinere Auslegung des Pumpenmotors hat den Vorteil, dass das Bordnetz bzw. die Stromversorgung gerade bei niedrigen Motordrehzahlen nicht übermäßig belastet ist. Der Bauraum des Pumpenmotors ist hierdurch auch verkleinert. Der Pumpenmotor und das Steuergerät müssen hierdurch geringere Wärmemengen aufnehmen und sind im Schnitt kühler, was ebenfalls Bauteilkosten spart.

Die Hauptölpumpe, die von dem Verbrennungsmotor angetrieben wird, ist vorzugsweise eine Flügelzellenpumpe. Um Ansaugschwierigkeiten der Flügelzellenpumpe vorzubeugen, kann ein Aufladen der Hauptölpumpe durch die Zusatzölpumpe vor Fahrtbeginn bspw. nach einem Öffnen einer Fahrertür erfolgen. Eine solche Funktion kann ohne weiteres durch die Mechatronik umgesetzt werden. Vorzugsweise ist mittels der Mechatronikeinheit eine Versorgungsleitung schaltbar, wobei die Versorgungsleitung die Mechatronikeinheit mit der Hauptölpumpe verbindet. Insbesondere wenn kein Druck und kein Kühlölvolumenstrom angefordert werden, fließt - abgesehen von den auftretenden Systemleckagen - der gesamte Ölvolumenstrom der Zusatzölpumpe über die Versorgungsleitung in den Ansaugtrakt der Hauptpumpe. Im ölbefüllten Zustand des Ansaugtraktes treten dann keine Ansaugschwierigkeiten auf. Die Zusatzölpumpe wird vorzugsweise als Aktor des Steuergerätes betrieben. Das Steuergerät der Ölpumpe wird über einen Getriebe-CAN-Bus mit Steuersignalen und Sollgrößen versorgt. In bevorzugter Ausgestaltung weist die Zusatzölpumpe eine vom Getriebesteuergerät unabhängige elektrische Spannungs- bzw. Leistungsversorgung auf. Damit ist es für spätere Anwendungen leicht möglich, die Pumpe von beispielsweise 12 Volt auf 48 Volt umzustellen, ohne dabei das Getriebesteuergerät ändern zu müssen.

Die eingangs genannten Nachteile sind daher vermieden, entsprechende Vorteile sind erzielt.

Es gibt nun eine Vielzahl von Möglichkeiten, die erfindungsgemäße Ölpumpenanordnung auszugestalten und weiterzubilden. Hierfür darf zunächst auf die dem Patentanspruch 1 nachgeordneten Patentansprüche verwiesen werden. Im Folgenden wird eine bevorzugte Ausgestaltung der Erfindung anhand der Zeichnung und der dazugehörigen Beschreibung näher erläutert. In der Zeichnung zeigt:
- Fig. 1: in einer schematischen, geschnittenen Darstellung eine an einem Kupplungsgehäuse angeordnete Zusatzölpumpe und ein Achsdifferential,
- Fig. 2: in einer schematischen, geschnitten Detaildarstellung die Zusatzölpumpe,
- Fig. 3: in einer stark schematischen Darstellung ein Kraftfahrzeug mit einer Verbrennungskraftmaschine und mit einem Doppelkupplungsgetriebe,
- Fig. 4: in einer schematischen Darstellung einen ersten Hydraulikkreislauf mit der Zusatzölpumpe und einer Hauptölpumpe, und
- Fig. 5: in einer stark schematischen Darstellung einen weiteren Hydraulikkreislauf mit der Hauptölpumpe und der Zusatzölpumpe.

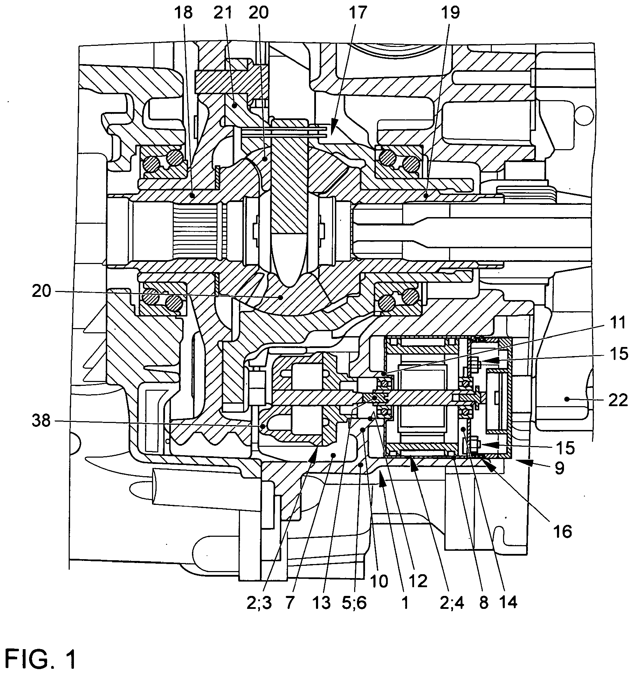

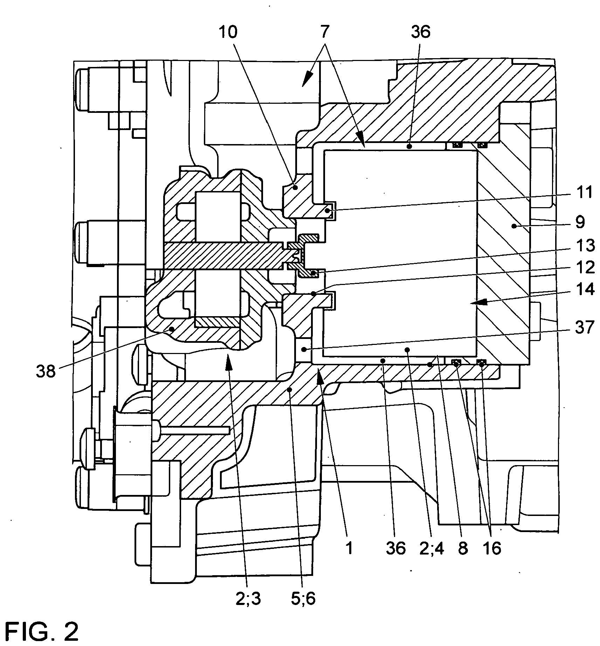

In den Fig. 1 und Fig. 2 ist eine Ölpumpenanordnung 1 mit einer Zusatzölpumpe 2 für ein nicht näher dargestelltes Getriebe eines Kraftfahrzeugs zu erkennen.

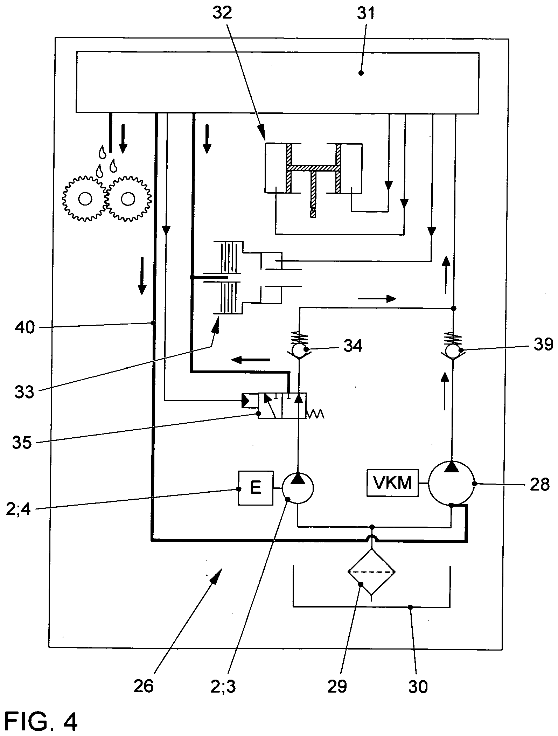

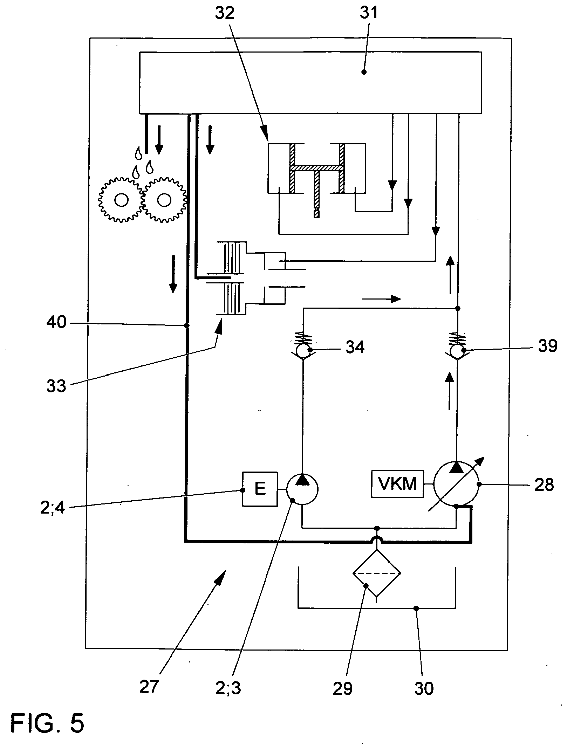

Die Zusatzölpumpe 2 ist in einen Hydraulikkreislauf 26 oder 27 integriert (vgl. Fig. 4 bzw. 5), wobei die Hydraulikkreisläufe 26, 27 jeweils eine Hauptölpumpe 28 aufweisen, wobei die Hauptölpumpe 28 parallel zu der Zusatzölpumpe 2 (mit dem entsprechenden Pumpenteil 3 und dem Pumpenmotor 4) angeordnet ist. Das Pumpenteil 3 ist insbesondere als Zahnradpumpe ausgebildet. Das Pumpenteil 3 kann als Gerotorpumpe, d.h. als Zahnringpumpe oder auch als Sichelpumpe ausgebildet sein.

Bevor auf die Hydraulikkreise 26, 27 näher eingegangen wird, darf jedoch zunächst die Anordnung und Ausbildung der Zusatzölpumpe 2 anhand der Fig. 1 und 2 erläutert werden:
Die Zusatzölpumpe 2 weist ein hydrostatisches Pumpenteil 3 und einen Pumpenmotor 4 auf. Das Pumpenteil 3 ist von dem Pumpenmotor 4 antreibbar und steht mit dem Pumpenmotor 4 in Wirkverbindung. Das Pumpenteil 3 und der Pumpenmotor 4 sind an einem Gehäuse 5 montiert. Das Gehäuse 5 ist als Kupplungsgehäuse 6 ausgebildet. Das Gehäuse 5 begrenzt einen Ölraum 7.

Die eingangs genannten Nachteile sind nun dadurch vermieden, dass das Pumpenteil 3 innerhalb des Gehäuses 5 und der Pumpenmotor 4 von außen am Gehäuse 5 montierbar ist. Das Gehäuse 5 weist eine Aufnahme 8 auf. Das Pumpenteil 3 wird von innen am Gehäuse 5 und der Pumpenmotor 4 mit einem Steuergerät 9 von außen in der Aufnahme 8 am Gehäuse 5 montiert. Die Antriebseinheit besteht aus dem Pumpenmotor 4 und dem Steuergerät 9 ist und für einen Kundendienst von außen zugänglich angeordnet und somit tauschbar.

Das Gehäuse 5 weist eine Montagewand 10 auf. Die Montagewand 10 weist einen in die Aufnahme vorkragenden Sitz 11 auf. Der Pumpenmotor 4 ist an dem Sitz 11 zentriert. Der Sitz 11 umgibt einen Durchgriff 12. Ferner ist auf der anderen Seite der Montagewand 10 im Inneren das Pumpenteil 3 an dem Durchgriff 12 zentriert. Der Sitz 11 und der Durchgriff 12 sind zentral an der Montagewand 10 ausgebildet. Der Durchgriff 12 ist insbesondere zylindrisch ausgebildet und erstreckt sich koaxial zur nicht dargestellten virtuellen Pumpenachse der Zusatzölpumpe 2. Der Durchgriff 12 und der Sitz 11 ermöglichen eine gemeinsame Zentrierung des Pumpenteils 3 und des Pumpenmotors 4.

Die Montagewand 10 weist Öffnungen 37 auf, so dass Öl in die Aufnahme 8 gelangen kann. Die Aufnahme 8 bildet daher auch einen Teil des Ölraums 7. Der Pumpenmotor 4 befindet sich innerhalb des Ölraums 7. Zwischen dem Pumpenmotor 4 und der Aufnahme 8 verbleibt ein Spalt 36. Hierdurch ist der Pumpenmotor 4 durch das entsprechende Öl (nicht dargestellt) am Außenumfang kühlbar.

Es ist eine Zwischenwelle 13 vorgesehen (vgl. Fig. 2), wobei die Zwischenwelle 13 das Pumpenteil 3 und den Pumpenmotor 4 durch den Durchgriff 12 miteinander verbindet. Die Zwischenwelle 13 ist verliersicher in das Pumpenteil 3 integriert. Die Leistungsübertragung zwischen dem Pumpenmotor 4 und dem Pumpenteil 3 erfolgt über eine Steckverzahnung bzw. ein Mehrkantprofil (nicht näher bezeichnet) oder alternativ über eine andere formschlüssige Verbindung. Die Zwischenwelle 13 ist vorzugsweise nicht fest gelagert und kann so Winkelfehler zwischen dem Pumpenmotor 4 und dem Pumpenteil 3 ähnlich einer Gelenkwelle ausgleichen.

Das Steuergerät 9 ist am Kopf 14 des Pumpenmotors 4 angeordnet. Das Steuergerät 9 ist insbesondere mit dem Pumpenmotor 4 verbunden. Vorzugsweise ist eine Schraubverbindung 15 (vgl. Fig. 1) vorgesehen, die das Steuergerät 9 mit dem Pumpenmotor 4 verbindet. Das Steuergerät 9, insbesondere ein entsprechendes Gehäuse (nicht näher bezeichnet) des Steuergerätes 9 wird nun dazu verwendet, die Aufnahme 8 des Kupplungsgehäuses 6 gegenüber der Umgebung abzudichten. Das Steuergerät 9 ragt dazu zumindest teilweise in die Aufnahme 8 hinein und liegt an dem Innenumfang der Aufnahme 8 mittels entsprechender Dichtmittel 16 abdichtend an. Das Steuergerät 9 liegt im Gegensatz zum Pumpenmotor 4 teilweise außerhalb des Kupplungsgehäuses 6. Die Dichtmittel 16 können insbesondere als O-Ringe ausgebildet sein. Alternativ können als Dichtmittel 16 Formdichtringe oder ein Multi-Lip-Seal genutzt werden, um das Steuergerät 9 gegenüber der Aufnahme 8 abzudichten. Ferner ist eine antriebsinterne Ölabdichtung des Steuergeräts 9 gegenüber dem ölumströmten Pumpenmotor 4 vorgesehen. Hierzu können insbesondere stromtragende 3-Phasen-Leitungen durch einen Verguss gegenüber dem Pumpenmotor 4 abgedichtet sein. Es kann sich insbesondere um einen Glasverguss handeln.

Wie in Fig. 1 gut zu erkennen ist, ist die Zusatzölpumpe 2 hier im Bereich eines Differentials 17 angeordnet. Das Differential 17 weist insbesondere zwei Achswellen 18, 19 auf, die über entsprechende Ausgleichsräder 20 in Wirkverbindung stehen. Die Ausgleichsräder 20 sind entsprechend drehbar an einem angetriebenen Ausgleichsgehäuse 21 gelagert. Das Pumpenteil 3 und der Pumpenmotor 4 sind in der Umgebung des Differentials 17 im bzw. am Kupplungsgehäuse 6 angeordnet. Die Achse dieses Systems bestehend aus dem Pumpenteil 3 und dem Pumpenmotor 4 liegt unterhalb der Mitte des Differentials 17 möglichst nah an einem nicht dargestellten Saugfilter. Diese Achse des Systems ist planparallel zu der entsprechenden Achse der Achswellen 18, 19. Es ist jedoch durchaus auch eine andersartige Ausrichtung der Achse der Zusatzölpumpe 2 möglich.

Der Bauraum des Pumpenteils 3 überschneidet sich mit tragenden Strukturen, nämlich einer entsprechenden Rippe, die an der Innenseite des Kupplungsgehäuse 6 ausgebildet ist. Das Pumpenteil 3 hat vorzugsweise eine tragende Funktion und überträgt entsprechende Lasten, ohne dass es zu einer Deformation im Radsatz (nicht näher bezeichnet) des Pumpenteils 3 kommt. Das Gehäuse 5 weist eine Rippe auf (nicht dargestellt), wobei die Rippe eine Aussparung im Bereich des Pumpenteils 3 aufweist, wobei das Pumpenteil 3 die Aussparung überbrückt und so die Versteifungsfunktion der Rippe in diesem Bereich übernimmt. Das Pumpenteil 3 weist ein Pumpengehäuse 38 auf. Das Pumpengehäuse 38 ist so gestaltet, dass die erforderliche Tragfunktion der Rippe durch das Pumpengehäuse 38 übernommen wird. Die Struktur ist dabei so gewählt, dass die zu übertragenden Lasten höchstens zu geringen Deformationen im Pumpengehäuse 38, nämlich des entsprechenden Radsatzes führen. Das Pumpengehäuse 38 wird über drei Schrauben mit dem Kupplungsgehäuse 6 verbunden. Der hydraulische Teil der Zusatzölpumpe 2 - nämlich das Pumpenteil 3 - ist von außen unzugänglich in den Getrieberaum integriert.

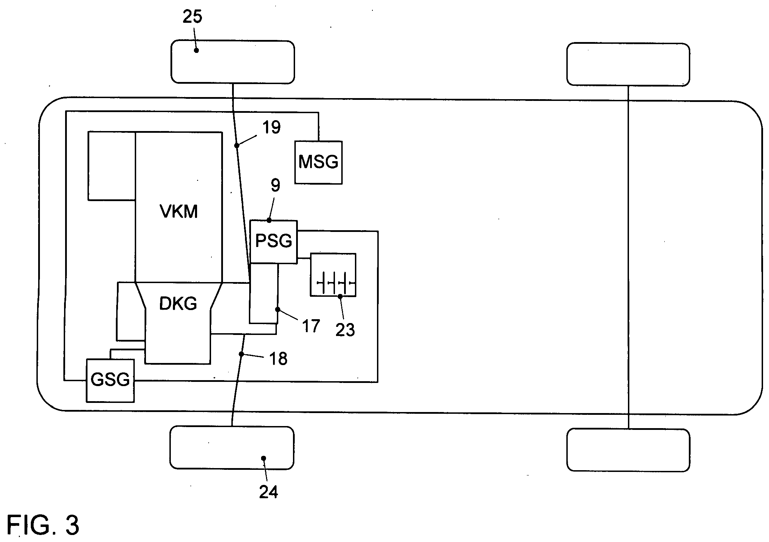

Das Steuergerät 9 ist insbesondere gekrümmt bzw. "bananenförmig" ausgebildet und umgreift so den in Fig. 1 rechten Bereich des Differentials 17 bogensegmentförmig. Das Steuergerät 9 ist hier im Bereich der Schnittstelle für den Vorderachsantrieb bzw. der Vorderachsquersperre angeordnet. Beim Verbau dieser Aggregate ist das Steuergerät 9 zwischen dem Gehäuse 22 des Vorderachsantriebes und des Gehäuses 5 angeordnet. Bei Allradfahrzeugen bzw. bei Fahrzeugen mit Quersperren findet kein stärkere Erwärmung statt. Sind diese Zusatzaggregate nicht verbaut, könnte das Steuergerät 9 der Wärme der Abgasanlage ausgesetzt sein. Es erfolgt hierbei eine Entwärmung des Steuergerätes 9 über eine massive Verschraubung mit dem Kupplungsgehäuse 6 oder in alternativer Bauform über einen flächigen Kontakt des Steuergerätes 9 mit dem Kupplungsgehäuse 6. Diese elektrisch angetriebene Zusatzölpumpe 2 ist im vorhandenen Bauraum in ein quer eingebautes Doppelkupplungsgetriebe DKG (vgl. Fig 3) integrierbar. Bei einer maximalen Leistungsaufnahme der Zusatzölpumpe 2 von 300 Watt sind insbesondere Kühlölmengen von bis zu 15 Liter pro Minute bereitstellbar.

In Fig. 3 ist eine Verbrennungskraftmaschine VKM und ein Doppelkupplungsgetriebe DKG dargestellt. Das Doppelkupplungsgetriebe DKG wird von einem Getriebesteuergerät GSG gesteuert bzw. geregelt. Über einen Antriebs-CAN-Bus (CAN-Controller Area Network) ist das Getriebesteuergerät GSG mit einem Motorsteuergerät MSG verbunden. Über einen Getriebe-CAN-Bus ist das Getriebesteuergerät GSG mit dem Pumpensteuergerät 9/PSG verbunden. Das Pumpensteuergerät 9/PSG ist mit einer Strom- bzw. Spannungsversorgung 23 verbunden. Diese Spannungsversorgung 23 kann wie dargestellt mit 12 Volt arbeiten oder in alternativer Ausgestaltung beispielsweise 48 Volt bereitstellen. Die Spannungsversorgung 23 ist unabhängig von einer Spannungsversorgung des Getriebesteuergerätes GSG. Damit ist es für spätere Anwendungen leicht möglich die Zusatzölpumpe 2 beispielsweise von 12 Volt auf 48 Volt umzustellen ohne dabei das Getriebesteuergerät GSG ändern zu müssen. Der Pumpenmotor 4 wird als Aktor des Getriebesteuergerätes GSG betrieben und über den Getriebe-CAN-BUS mit Steuersignalen und Sollgrößen versorgt.

Die Zusatzölpumpe 2 ist in Fig. 3 nicht näher dargestellt aber hier jedoch unterhalb des Differentials 17 angeordnet, wobei von dem Differential 17 die beiden Achswellen 18, 19 ausgehen und die entsprechenden Antriebsräder 24, 25 antreiben. Die Verbrennungskraftmaschine VKM und das Doppelkupplungsgetriebe sind im Frontbereich des Kraftfahrzeugs quer eingebaut.

Im Folgenden darf nun auf die zwei Hydraulikkreisläufe 26, 27 anhand der Fig. 4 und 5 eingegangen werden:
Die Hydraulikkreisläufe 26, 27 weisen jeweils zunächst eine Hauptölpumpe 28 auf, wobei die Hauptölpumpe 28 jeweils parallel zu der Zusatzölpumpe 2 mit dem entsprechenden Pumpenteil 3 und dem Pumpenmotor 4 angeordnet ist. Die Hauptölpumpe 28 wie auch die Zusatzölpumpe 2 fördern über einen Saugfilter 29 entsprechendes Getriebeöl aus einem Getriebeölsumpf 30.
Die Hauptölpumpe 28 versorgt eine Mechatronikeinheit 31. Von der Mechatronikeinheit 31 werden entsprechende Aktuatoren 32 oder auch die Kupplung 33 mit Drucköl versorgt. Ferner wird über die Mechatronikeinheit 31 dem Getriebe Kühlöl bzw. Schmieröl zugeführt, wie es durch die beiden Zahnritzel links in den Abbildungen 4 und 5 dargestellt ist. Die Zusatzölpumpe 2 fördert nun parallel zu der Hauptölpumpe 28 ebenfalls entsprechendes Öl zur Mechatronikeinheit 31. Hierbei ist zwischen der Mechatronikeinheit 31 und der Zusatzölpumpe 2 ein Rückschlagventil 34 vorgesehen. Das Rückschlagventil 34 ist in einer Ausgestaltung innerhalb des Gehäuses 5 angeordnet. Alternativ kann das Rückschlagventil 34 in die Mechatronikeinheit 31 integriert sein.

Ferner ist ein Rückschlagventil 39 stromabwärts der Hauptölpumpe 28 angeordnet. Wenn nur die Zusatzölpumpe 2 und nicht die Hauptölpumpe 28 fördert, dann sperrt das Rückschlagventil 39 den Förderstrom der Zusatzölpumpe 2 gegen die Hauptölpumpe 28 ab, so dass der Förderstrom in die Mechatronik 31 geleitet wird. Die Durchströmung der Hauptölpumpe 28 entgegen der Förderrichtung ist durch das Rückschlagventil 39 unterbunden. Das Rückschlagventil 39 ist in einer Ausgestaltung innerhalb des Gehäuses 5 angeordnet. Das Rückschlagventil 39 kann in die Hauptölpumpe 39 integriert sein. Alternativ kann das Rückschlagventil 39 in die Mechatronikeinheit 31 integriert sein.

In der in Fig. 5 dargestellten Ausgestaltung ist die Hauptölpumpe 28 verstellbar. Dies stellt sicher, dass auch bei niedrigen Drehzahlen der Verbrennungskraftmaschine VKM noch hinreichend Kühlöl zur Verfügung steht. In der in Fig. 4 dargestellten Ausgestaltung ist die Hauptölpumpe 28 als Konstantpumpe ausgestaltet. Es ist nun ein Ventil 35 stromabwärts der Zusatzölpumpe 2 zwischen der Zusatzölpumpe 2 und dem Rückschlagventil 34 angeordnet. Mittels dieses Ventils 35 ist es möglich, Kühlöl unterhalb des Hauptdrucks bereitzustellen. Die Ansteuerung des Ventils 35 kann über ein elektrisches Vorsteuerventil in der Mechatronikeinheit 31 erfolgen. Alternativ kann das Ventil 35 direkt gesteuert sein. Das Ventil 35 kann innerhalb des Gehäuses 5 angeordnet sein. Das Ventil 35 kann in alternativer Ausgestaltung in die Mechatronikeinheit 31 integriert sein. Die Hauptölumpe 28 ist als Konstantölpumpe ausgebildet und weist ein großes Hubvolumen auf. So ist in jeder Betriebssituation eine hinreichende Ölversorgung gewährleistet.

Insbesondere weist das Kraftfahrzeug eine Start-Stopp-Automatik auf. Da die Hauptölpumpe 28 bei stehendem Verbrennungsmotor nicht fördert, ist nun die Zusatzölpumpe 2 vorgesehen. Hierdurch ist insbesondere eine Start-Stopp-Automatik auch bei mehr als 2 km pro Stunde und ein Segeln des Kraftfahrzeugs mit ausgestellter Verbrennungskraftmaschine VKM darstellbar. Durch die Anordnung der Zusatzölpumpe 2 ist das System robust. Ferner ist durch die Zusatzölpumpe 2 auch bei längeren Standzeiten und der Start-Stopp-Automatik gewährleistet, dass der Systemdruck hinreichend schnell aufgebaut werden kann. Des Weiteren kann durch die Zusatzölpumpe 2 der Gesamtwirkungsgrad im Antriebsstrang gesteigert werden. Insbesondere lassen sich Verluste durch die Bereitstellung hydraulischer Hilfsenergien für die Aktivierung sowie zu Kühl- und Schmierzwecken verringern. In die entsprechenden Hydraulikkreisläufe 26, 27 ist kein zusätzlicher hydraulischer Speicher integriert. Die Hauptölpumpe 28 kann beispielsweise kleiner ausgelegt werden, da Extremsituationen durch Zuschalten der Zusatzölpumpe 2 kompensiert werden können. Insbesondere lassen sich mit der vorgestellten Zusatzölpumpe 2 Start-Stopp-Funktionalitäten auch schon bei höheren Geschwindigkeiten von zum Beispiel 7 km/h oder ein Segeln des Kraftfahrzeugs mit ausgestellter Verbrennungskraftmaschine VKM bereitstellen. Durch die Zusatzölpumpe 2 kann auch bei stehendem Kraftfahrzeug hydraulische Energie in Form einer Druckölversorgung oder einer Schmierölversorgung bereitgestellt sein.

Die Hauptölpumpe 28 kann als Flügelzellenpumpe ausgebildet sein. Die Zusatzölpumpe 2 kann nun dazu eingesetzt werden, Ansaugschwierigkeiten der Flügelzellenpumpe bzw. der Hauptölpumpe 28 zu vermeiden. Beispielsweise kann ein Aufladen der Hauptölpumpe 28 durch die Zusatzölpumpe 2 erfolgen, wobei die Mechatronikeinheit 31 über eine zusätzliche Versorgungsleitung 40 mit dem Ansaugtrakt der Hauptölpumpe 28 verbunden ist. Die Versorgungsleitung 40 mündet vorzugsweise in eine Saugniere (nicht dargestellt) der Hauptölpumpe 28. Vorzugsweise ist mittels der Mechatronikeinheit 31 die Versorgungsleitung 40 schaltbar. Das Aufladen der Hauptölpumpe 28 ist hierbei durch die Mechatronikeinheit 31 bereitgestellt. Wenn kein Drucköl und kein Kühlölvolumenstrom angefordert werden, fließt abgesehen von den auftretenden Systemleckagen, der gesamte Ölvolumenstrom der Zusatzpumpe 2 über die zusätzliche Versorgungsleitung 40 in den Ansaugtrackt der Hauptölpumpe 28. Im ölbefüllten Zustand des Ansaugtracktes der Hauptölpumpe 28 treten dann keine Ansaugschwierigkeiten auf.

### Bezugszeichenliste

- 1: Ölpumpenanordnung
- 2: Zusatzölpumpe
- 3: Pumpenteil
- 4: Pumpenmotor
- 5: Gehäuse
- 6: Kupplungsgehäuse
- 7: Ölraum
- 8: Aufnahme
- 9: Steuergerät
- 10: Montagewand
- 11: Sitz
- 12: Durchgriff
- 13: Zwischenwelle
- 14: Kopf
- 15: Schraubverbindung
- 16: Dichtmittel
- 17: Differential
- 18: Achswelle
- 19: Achswelle
- 20: Ausgleichsrad
- 21: Ausgleichsgehäuse
- 22: Gehäuse (Vorderradachsantrieb)
- 23: Spannungsversorgung
- 24: Antriebsrad
- 25: Antriebsrad
- 26: Hydraulikkreislauf
- 27: Hydraulikkreislauf
- 28: Hauptölpumpe
- 29: Saugfilter
- 30: Getriebeölsumpf
- 31: Mechatronikeinheit
- 32: Aktuator
- 33: Kupplung
- 34: Rückschlagventil
- 35: Ventil
- 36: Spalt
- 37: Öffnungen
- 38: Pumpengehäuse
- 39: Rückschlagventil
- 40: Versorgungsleitung

- VKM: Verbrennungskraftmaschine
- DKG: Doppelkupplungsgetriebe
- GSG: Getriebesteuergerät
- PSG: Pumpensteuergerät
- MSG: Motorsteuergerät

## Patentansprüche

1. Ölpumpenanordnung (1) eines Kraftfahrzeuggetriebes, mit einer Ölpumpe (2), die ein Pumpenteil (3) und einen elektrischen Pumpenmotor (4) aufweist, wobei das Pumpenteil (3) in Wirkverbindung mit dem Pumpenmotor (4) steht, wobei das Pumpenteil (3) und/oder der Pumpenmotor (4) an einem Gehäuse (5) montiert ist, wobei das Gehäuse (5) einen Ölraum (7) zumindest teilweise begrenzt, wobei das Pumpenteil (3) innerhalb des Gehäuses (5) und der Pumpenmotor (4) von außen am Gehäuse (5) montiert ist, wobei eine Zwischenwelle (13) vorhanden ist, wobei die Zwischenwelle (13) das Pumpenteil (3) und den Pumpenmotor (4) miteinander verbindet, wobei das Gehäuse (5) eine Aufnahme (8) aufweist, wobei der Pumpenmotor (4) zumindest teilweise in die Aufnahme (8) eingreift, wobei das Gehäuse (5) eine die Aufnahme (8) begrenzende Montagewand (10) aufweist, wobei die Montagewand (10) einen Durchgriff (12) aufweist, wobei das Pumpenteil (3) innen an der Montagewand (10) zentriert ist und der Pumpenmotor (4) außen an der Montagewand (10) zentriert ist, wobei die Zwischenwelle (13) das Pumpenteil (3) und den Pumpenmotor (4) durch den Durchgriff (12) miteinander verbindet, wobei das Gehäuse (5) als Kupplungsgehäuse (6) ausgebildet ist, **dadurch gekennzeichnet, dass** am Pumpenmotor (4) ein Steuergerät (9) angeordnet ist, wobei das Steuergerät (9) gegenüber dem Pumpenmotor (4) abgedichtet ist, wobei das Steuergerät (9) gegenüber der Aufnahme (8) mittels mindestens eines Dichtmittels (16) abgedichtet ist, wobei das Steuergerät (9) zumindest teilweise außerhalb der Aufnahme (8) und damit auch außerhalb des Kupplungsgehäuses (6) liegt, wobei die Montagewand (10) Öffnungen aufweist, so dass Öl in die Aufnahme (8) gelangen kann, wobei die Aufnahme (8) einen Teil des Ölraums (7) bildet, wobei der Pumpenmotor (4) sich innerhalb des Ölraums (7) befindet, wobei zwischen dem Pumpenmotor (4) und der Aufnahme (8) ein Spalt (36) verbleibt, wobei der Pumpenmotor (4) durch das Öl am Außenumfang kühlbar ist.

2. Olpumpenanordnung nach Anspruch 1, **dadurch gekennzeichnet, dass** die Ölpumpe (2) im Bereich eines Differentials (17) des Kraftfahrzeuggetriebes angeordnet ist.

3. Olpumpenanordnung nach einem der vorstehenden Ansprüche, **dadurch gekennzeichnet, dass** das Pumpenteil (3) und der Pumpenmotor (4) über eine gelenkig angeordnete Zwischenwelle (13) verbunden sind.

4. Ölpumpenanordnung nach einem der vorstehenden Ansprüche, **dadurch gekennzeichnet, dass** das Pumpenteil (3) mit dem Gehäuse (5) verschraubt ist, wobei das Pumpenteil (3) eine Versteifungsfunktion des Gehäuses (5) übernimmt.

5. Ölpumpenanordnung nach dem vorstehenden Anspruch, **dadurch gekennzeichnet, dass** das Gehäuse (5) eine Rippe aufweist, wobei die Rippe eine Aussparung im Bereich des Pumpenteils (3) aufweist, wobei das Pumpenteil (3) die Aussparung überbrückt.

6. Ölpumpenanordnung nach einem der vorstehenden Ansprüche, **dadurch gekennzeichnet, dass** sie eine von einer Verbrennungskraftmaschine (VKM) funktional wirksam angetriebene Hauptölpumpe (28) aufweist, die in einem Hydraulikkreislauf (26, 27) parallel zur Ölpumpe (2) angeordnet ist.

7. Ölpumpenanordnung nach einem der vorstehenden Ansprüche, **dadurch gekennzeichnet, dass** ein Umschaltventil stromabwärts der Ölpumpe (2) vorgesehen ist, wobei in einer Schaltstellung des Umschaltventils die Ölpumpe (2) eine Mechatronik speist und in einer anderen Schaltstellung einen Kühlölzweig speist.

8. Olpumpenanordnung nach einem der vorstehenden Ansprüche, **dadurch gekennzeichnet, dass** eine Zusatzölpumpe (2) eine von einem Getriebesteuergerät (GSG) unabhängige elektrische Spannungsversorgung (23) aufweist.

9. Ölpumpenanordnung nach Anspruch 6, **dadurch gekennzeichnet, dass** ein Ansaugtrakt der Hauptölpumpe (28) durch die Ölpumpe (2) aufladbar ist.

10. Ölpumpenanordnung nach einem der vorstehenden Ansprüche, **dadurch gekennzeichnet, dass** das Kupplungsgehäuse (6) einen Teil eines Getriebegehäuses bildet und/oder ein Getriebegehäuse zumindest teilweise abdichtet.

## Claims

1. Oil pump arrangement (1) of a motor vehicle transmission, with an oil pump (2) which has a pump part (3) and an electric pump motor (4), the pump part (3) being operatively connected to the pump motor (4), the pump part (3) and/or the pump motor (4) being mounted on a housing (5), the housing (5) delimiting an oil space (7) at least partially, the pump part (3) being mounted within the housing (5), and the pump motor (4) being mounted on the housing (5) from the outside, there being an intermediate shaft (13), the intermediate shaft (13) connecting the pump part (3) and the pump motor (4) to one another, the housing (5) having a receptacle (8), the pump motor (4) engaging at least partially into the receptacle (8), the housing (5) having a mounting wall (10) which delimits the receptacle (8), the mounting wall (10) having a reach-through (12), the pump part (3) being centred on the inside on the mounting wall (10), and the pump motor (4) being centred on the outside on the mounting wall (10), the intermediate shaft (13) connecting the pump part (3) and the pump motor (4) to one another through the reach-through (12), the housing (5) being configured as a clutch housing (6), **characterized in that** a control unit (9) is arranged on the pump motor (4), the control unit (9) being sealed with respect to the pump motor (4), the control unit (9) being sealed with respect to the receptacle (8) by means of at least one sealing means (16), the control unit (9) lying at least partially outside the receptacle (8) and therefore also outside the clutch housing (6), the mounting wall (10) having openings, with the result that oil can pass into the receptacle (8), the receptacle (8) forming a part of the oil space (7), the pump motor (4) being situated within the oil space (7), a gap (36) remaining between the pump motor (4) and the receptacle (8), it being possible for the pump motor (4) to be cooled by way of the oil on the outer circumference.

2. Oil pump arrangement according to Claim 1, **characterized in that** the oil pump (2) is arranged in the region of a differential (17) of the motor vehicle transmission.

3. Oil pump arrangement according to either of the preceding claims, **characterized in that** the pump part (3) and the pump motor (4) are connected via an intermediate shaft (13) which is arranged in an articulated manner.

4. Oil pump arrangement according to one of the preceding claims, **characterized in that** the pump part (3) is screwed to the housing (5), the pump part (3) assuming a reinforcing function of the housing (5).

5. Oil pump arrangement according to the preceding claim, **characterized in that** the housing (5) has a rib, the rib having a cut-out in the region of the pump part (3), the pump part (3) bridging the cut-out.

6. Oil pump arrangement according to one of the preceding claims, **characterized in that** it has a main oil pump (28) which is driven in a functionally effective manner by an internal combustion engine (VKM) and is arranged in a hydraulic circuit (26, 27) parallel to the oil pump (2).

7. Oil pump arrangement according to one of the preceding claims, **characterized in that** a switchover valve is provided downstream of the oil pump (2), the oil pump (2) feeding a mechatronics system in one switching position of the switchover valve, and feeding a cooling oil branch in another switching position.

8. Oil pump arrangement according to one of the preceding claims, **characterized in that** an additional oil pump (2) has an electric voltage supply (23) which is independent of a transmission control unit (GSG).

9. Oil pump arrangement according to Claim 6, **characterized in that** an intake section of the main oil pump (28) can be loaded by way of the oil pump (2).

10. Oil pump arrangement according to one of the preceding claims, **characterized in that** the clutch housing (6) forms a part of a transmission housing and/or seals a transmission housing at least partially.

## Revendications

1. Agencement de pompe à huile (1) d'une boîte de vitesses de véhicule automobile, comprenant une pompe à huile (2) qui présente une partie de pompe (3) et un moteur de pompe électrique (4), la partie de pompe (3) étant en liaison fonctionnelle avec le moteur de pompe (4), la partie de pompe (3) et/ou le moteur de pompe (4) étant montés sur un carter (5), le carter (5) délimitant au moins partiellement un compartiment d'huile (7), la partie de pompe (3) étant montée à l'intérieur du carter (5) et le moteur de pompe (4) étant monté de l'extérieur sur le carter (5), dans lequel un arbre intermédiaire (13) est présent, l'arbre intermédiaire (13) reliant la partie de pompe (3) et le moteur de pompe (4) l'une à l'autre, le carter (5) présentant un logement (8), le moteur de pompe (4) venant au moins partiellement en prise dans le logement (8), le carter (5) présentant une paroi de montage (10) délimitant le logement (8), la paroi de montage (10) présentant un passage (12), la partie de pompe (3) étant centrée à l'intérieur centrée sur la paroi de montage (10), et le moteur de pompe (4) étant centré à l'extérieur sur la paroi de montage (10), l'arbre intermédiaire (13) reliant la partie de pompe (3) et le moteur de pompe (4) l'une à l'autre à travers le passage (12), le carter (5) étant réalisé sous la forme d'un carter d'embrayage (6),
**caractérisé en ce que** sur le moteur de pompe (4) un appareil de commande (9) est disposé, l'appareil de commande (9) étant rendu étanche par rapport au moteur de pompe (4), l'appareil de commande (9) étant rendu étanche par rapport au logement (8) au moyen d'au moins un produit d'étanchéité (16), l'appareil de commande (9) étant situé au moins partiellement à l'extérieur du logement (8) et donc aussi à l'extérieur du carter d'embrayage (6), la paroi de montage (10) présentant des orifices de sorte que l'huile peut atteindre le logement (8), le logement (8) faisant partie du compartiment d'huile (7), le moteur de pompe (4) se trouvant à l'intérieur du compartiment d'huile (7), un interstice (36) restant entre le moteur de pompe (4) et le logement (8), le moteur de pompe (4) pouvant être refroidi par l'huile sur la circonférence extérieure.

2. Agencement de pompe à huile selon la revendication 1, **caractérisé en ce que** la pompe à huile (2) est disposée au niveau d'un différentiel (17) de la boîte de vitesses de véhicule automobile.

3. Agencement de pompe à huile selon l'une quelconque des revendications précédentes, **caractérisé en ce que** la partie de pompe (3) et le moteur de pompe (4) sont reliés par un arbre intermédiaire (13) disposé de manière articulée.

4. Agencement de pompe à huile selon l'une quelconque des revendications précédentes, **caractérisé en ce que** la partie de pompe (3) est vissée avec le carter (5), la partie de pompe (3) remplissant une fonction de renfort du carter (5).

5. Agencement de pompe à huile selon la revendication précédente, **caractérisé en ce que** le carter (5) présente une nervure, la nervure présentant un évidement au niveau de la partie de pompe (3), la partie de pompe (3) recouvrant l'évidement.

6. Agencement de pompe à huile selon l'une quelconque des revendications précédentes, **caractérisé en ce qu'**il présente une pompe à huile principale (28) entraînée de manière fonctionnellement efficace par un moteur à combustion interne (VKM) et disposée dans un circuit hydraulique (26, 27) en parallèle à la pompe à huile (2) .

7. Agencement de pompe à huile selon l'une quelconque des revendications précédentes, **caractérisé en ce qu'**une soupape de commutation est prévue en aval de la pompe à huile (2), dans lequel, dans une position de commutation de la soupape de commutation, la pompe à huile (2) alimente un dispositif mécatronique, et alimente une branche d'huile de refroidissement dans une autre position de commutation.

8. Agencement de pompe à huile selon l'une quelconque des revendications précédentes, **caractérisé en ce qu'**une pompe à huile auxiliaire (2) présente une alimentation en tension électrique (23) indépendante de l'appareil de commande de boîte de vitesses (GSG).

9. Agencement de pompe à huile selon la revendication 6, **caractérisé en ce qu'**une tubulure d'aspiration de la pompe à huile principale (28) peut être rechargée par la pompe à huile (2).

10. Agencement de pompe à huile selon l'une quelconque des revendications précédentes, **caractérisé en ce que** le carter d'embrayage (6) constitue et/ou rend au moins partiellement étanche une partie d'un carter d'embrayage.
